(19) Europäisches Patentamt
European Patent Office
Office européen des brevets

(11) **EP 0 535 112 B1**

(12) **EUROPEAN PATENT SPECIFICATION**

(45) Date of publication and mention
of the grant of the patent:
**11.12.1996 Bulletin 1996/50**

(21) Application number: **91911980.0**

(22) Date of filing: **17.06.1991**

(51) Int Cl.6: **G11B 7/00**, G11B 7/09,
G11B 5/58

(86) International application number:
**PCT/US91/04255**

(87) International publication number:
**WO 91/20077 (26.12.1991 Gazette 1991/29)**

(54) **OPTICAL SERVO SYSTEM FOR MAGNETIC DISK**

OPTISCHES SERVOSYSTEM FÜR MAGNETPLATTE

SERVOSYSTEME OPTIQUE POUR DISQUE MAGNETIQUE

(84) Designated Contracting States:
**DE FR GB**

(30) Priority: **18.06.1990 US 539625**

(43) Date of publication of application:
**07.04.1993 Bulletin 1993/14**

(73) Proprietor: **MATSUSHITA KOTOBUKI
ELECTRONICS INDUSTRY LTD.
Takamatsu-City, Kagawa, 760 (JP)**

(72) Inventors:
• **FARNSWORTH, Stephen, W.
Berthoud, CO 80513 (US)**
• **WILSON, Scott, D.
Westminster, CO 80234 (US)**

(74) Representative: **W.P. THOMPSON & CO.
Eastcheap House
Central Approach
Letchworth, Hertfordshire SG6 3DS (GB)**

(56) References cited:
**EP-A- 0 035 236      EP-A- 0 130 495
EP-A- 0 344 759      FR-A- 2 347 744
US-A- 4 253 723      US-A- 4 525 826**

**Description**

FIELD OF THE INVENTION

The present invention relates to information storage systems and more particularly to an optical sensor and a system for tracking the position of a head with respect to data tracks concentrically, or spirally, spaced about the rotational axis of a disk.

BACKGROUND OF THE INVENTION

The present emphasis in the development of information storage systems is the capability to store more and more information into a so-called "desk top" sized computer memory system. Those "desk top" sized memory systems which incorporate magnetically recorded hard disk media, such as that used in Winchester disk drive type memory systems, currently have the capacity to store upwards of 20 megabytes of magnetically recorded information. The problem with such memory systems is that by necessity the hard disk media is permanently mounted into the computer. Since the media is not easily removable, the use is limited to whatever portion of the hard disk is remaining for information storage at the time of use. Accordingly, magnetically recorded hard disk media information storage systems are not viewed as a potential solution to increasing information storage capacity.

So-called "floppy" disk memory systems wherein flexible disks, each having a diameter of either 133mm or 90mm (5.25 inches or 3.50 inches), are used as the storage media provides easily removable storage media. However, the problem with such storage systems is that the present storage capacity of information magnetically recorded on a single floppy disk used in such a system has not yet reached a level equal to that of the hard disk, i.e., a single floppy disk media can only store approximately 1 to 2 megabytes of magnetically recorded information.

Systems for storing information which can be accessed through optical devices have received significant attention due to their potential capacity to store substantially more data, i.e., on the order of 400 to 800 megabytes of information, than that available in either magnetically recorded hard disk or floppy disk storage systems.

The improved capacity of optical memory is obtained at a higher cost for the media, as well as for the drive when compared to magnetic memory devices. New advances in barium-ferrite (BaFe) magnetic media allows bit densities to exceed optical bit densities. However, track densities of removable magnetic media are many times less than their optical counterparts.

A disk drive which uses an optical track sensing technique to determine the radial position of a magnetic head on a disk has been used to allow higher track densities. One such system is described in AN INTRODUCTION TO THE INSITE 325 FLOPTICAL® DISK DRIVE, Godwin, in a paper presented at the SPIE Optical Data Storage Topical Meeting (1989). This disk drive uses disks containing prewritten optical tracks with a 20 micron pitch. A light emitting diode illuminates the disk. The image of the disk's surface is transferred to a four-element photodetector by a lens and mirror. Such a system has the following drawbacks.

Because the INSITE head uses an L.E.D. as a diffused illumination source, light intensity at the disk, and subsequently on the detector, is very low. This creates a very low level tracking signal which must be greatly amplified electronically. Any system noise at this point also gets amplified and a signal with a high degree of undesired noise is obtained.

The INSITE head senses a very short segment of only two tracks. Since such a small area of the tracks is being detected, then flaws in the disk such as small debris, scratches, roughness of the edges of the optical tracks, or even reflectivity variations all contribute to noise.

The head of the INSITE optical system creates a magnified image (5.5X) of the surface of the disk with a very short depth of focus (± 6 μm). Because of this short depth of focus, the tracking signals degrade very quickly in the presence of shock, vibration, and thermal expansion within the head. INSITE includes a bi-metallic mechanism to compensate for thermal expansion and index of refraction changes within the optical system.

It is known from FR-A-2347744 to provide a simple system for controlling the position of a magnetic read/write head using servo control.

EP-A-0344759 describes a method of inscribing indelible grooves in the surface of a magnetic disk to serve as optical servo tracks.

EP-A-0130495 describes a magnetic record disk having a servo pattern of detectable marks thereon for use with a transducer control system.

SUMMARY OF THE INVENTION

It is an object of the invention to provide a sensor and an optical tracking system which obviates the foregoing disadvantages in prior disk storage systems.

It is an object of the present invention to provide a magnetic disk storage system with a high track density made possible by using an optical track sensing system which is relatively insensitive to noise, shock, vibration and thermal expansion.

In accordance with the present invention, this is achieved by a magnetic disk storage system as claimed in claim 1 and by an optical tracking servo system as claimed in claim 18.

The invention has the following advantages over prior optical tracking systems.

A high intensity spot is incident on the disk surface and re-imaged at the detector. This yields a much higher level tracking signal requiring less amplification. The resulting tracking signal has less noise when compared to the INSITE head, for example.

In the invention, the tracking signal is created by sensing a larger area of the disk. The pattern covers an area several tracks wide and several microns long. The reason for detecting a larger area of the disk is to reduce the noise caused by small flaws in the disk or edge roughness in the pre-written servo tracks. This is achieved by effectively averaging the tracking signal over several tracks on the disk at once. An extremely long depth of focus (greater than 1 mm) makes the system insensitive to disk axial runout, shock, vibration, thermal expansion and other thermal changes.

In accordance with another aspect of the invention, the high intensity spot interference pattern is incident upon a fixed grating instead of being incident directly on the disk itself. This grating, or encoder, has a "flag" area which indicates the zero position of the magnetic head. When the optical servo system senses the flag area, an indication is produced that the head is at the zero, or reference, position. This is used to reset the radial position counter of the disk drive.

Further in accordance with the present invention, the optical system of the present invention includes holographic optical elements. These holographic optical elements and a lens are molded on a block of transparent plastic which provides temperature compensation for the optical elements.

In accordance with a further aspect of the invention, the optical servo system includes integrated optical elements which are attached to, and form a monolithic structure with, the magnetic head which reads the data tracks.

The foregoing and other objects, features and advantages of the invention will be better understood from the following more detailed description of a particular embodiment.

DESCRIPTION OF THE DRAWINGS

Fig. 1 depicts a disk storage system and an optical tracking system in accordance with the present invention;
Fig. 2 shows a portion of a disk with the pattern of the servo tracks and the interference pattern thereon;
Fig. 3 shows a layout of the tracking system of the present invention;
Fig. 3A shows the HOE implementation;
Fig. 4 shows the two slits producing an interference pattern;
Fig. 4A depicts the width and spacing of the slits;
Fig. 4B shows the relationship between the interference pattern and the width and spacing of the slits;
Fig. 5 is an exaggerated enlargement of the interference pattern;
Fig. 6 depicts the optical interference pattern in relation to the servo track;
Fig. 7A depicts the reflectivity of the servo tracks as a function of disk radius;
Fig. 7B depicts the light intensity of the optical interference pattern as a function of disk radius;
Fig. 8 and 8A depict the prism breaking the optical interference pattern into two optical patterns;
Fig. 9 and 9A show the HOE implementation in more detail;
Figs. 10A and 10B depict the two reflected optical patterns;
Figs. 11A and 11B depict the quadrature servo error signals generated by the binary cell photodetector; and
Fig. 12 shows an alternate embodiment with an optical encoder; and
Fig. 12A depicts the quad cell photodetector of Fig. 12.
Fig. 13 is similar to Fig. 12, but further shows the servo system used to reset the radial track counter;
Fig. 14 shows the flag area on the encoder grating;
Fig. 15A shows the servo error signal produced as the spot 53 traverses the portion 56 of the encoder;
Fig. 15B shows the other, non-flagged, servo error signal;
Fig. 16 shows an alternate embodiment of the flag area;
Fig. 17A shows the servo error signal as the spot traverses the flag area of the encoder of Fig. 16;
Fig. 17B shows the other, non-flagged, servo error signal;
Fig. 18 depicts an alternate embodiment in which a separate interference pattern, or spot, traverses the flag area on the encoder;
Fig. 18A shows the servo error signal as the spot 53 traverses the grating of Fig. 18;
Fig. 18B shows the servo error signal as the spot 54 traverses the grating;
Fig. 18C shows the signal produced as the spot 64 traverses the grating of Fig. 18;

Fig. 19A is an edge view of a plastic block on which holographic elements and lenses are molded;

Fig. 19B is a bottom plan view of the plastic block of Fig. 19A;

Fig. 20A is a cross-section view of an integrated optics head with attached magnetic head;

Fig. 20B is a partial rear view of the heads of Fig. 20A;

Fig. 20C is a bottom isometric of the monolithic structure of Fig. 20A; and

Fig. 21 shows a ray path through a curved surface.

## DESCRIPTION OF THE PREFERRED EMBODIMENT

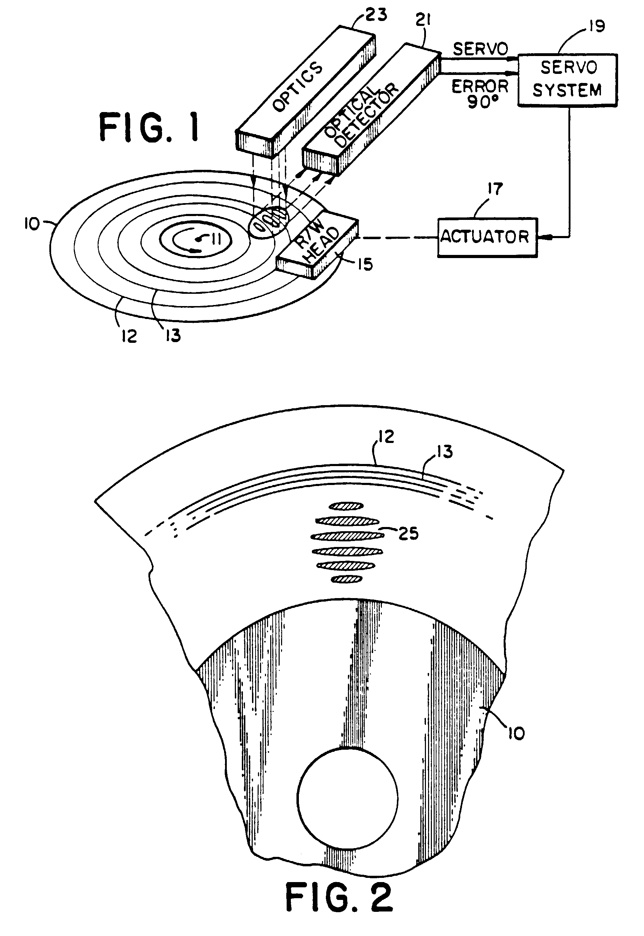

Fig. 1 shows a magnetic disk storage system for reading data from or writing data to a removable disk surface 10 having a rotational axis 11 and a plurality of data tracks. Servo tracks 12, 13 and others form an optical pattern concentrically recorded with said data tracks. Alternatively, the servo tracks may be a spiral pattern.

The disk is rotated about its axis 11 by a drive which is not shown. A read/write head 15 is positioned adjacent to the disk surface for reading or writing. An actuator 17 positions head 15 with respect to the disk surface. A servo system 19 controls actuator 17. The servo system is responsive to a servo error signal generated by the optical detector 21.

In accordance with the present invention, an optical interference pattern is generated by the optics 23 which is mounted rigidly with read/write head 15. The interference pattern is incident on the servo tracks of the disk immediately next to write head 15. The reflected light is the convolution of the interference pattern and the pre-recorded servo tracks. This light is detected by the optical detector 21 to produce the servo error signal.

Fig. 2 depicts a portion of magnetic disk 10. The pre-recorded servo tracks are shown at 12 and 13. The optical interference pattern 25 has fringes which have a spacing approximately equal to the spacing of the servo tracks.

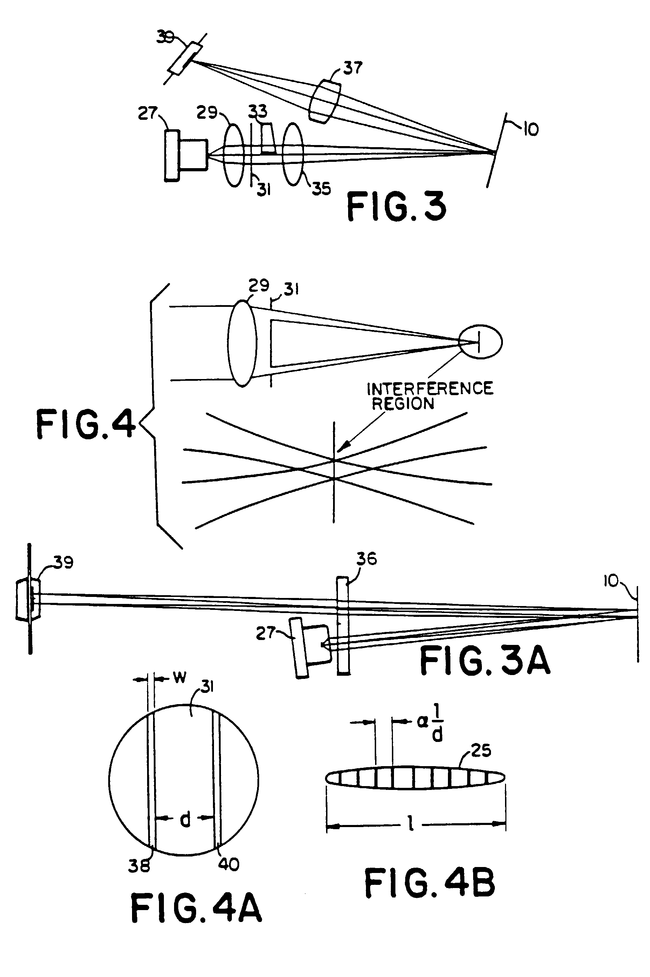

Referring to Fig. 3, a low power 780 nm laser diode 27 emits coherent light which is gathered by the collecting lens 29. An aperture plate 31 has two slits producing two crossed beams of coherent light. A prism 33 splits the laser beam in the direction orthogonal to the two interfering beams. Prism 33 covers half of the light passing through each slit. Prism 33 rotates half of the beam slightly so that two interference patterns appear in the focal plane of the lens 35. The spots of coherent light are incident upon the disk 10. Incident light is convolved with the pre-recorded optical pattern of the servo tracks on the disk 10. The reflected light is imaged by imaging lens 37 on the binary cell photodetector 39. The two cells detect the two reflected light patterns to produce quadrature signals which are used as the servo error signal.

As shown in Fig. 4, light passing through spot forming lens 35 is split into two paths of light by the aperture plate 31. An interference pattern of several cycles is created at the focal plane of the lens system. The spatial frequency of the interference pattern is determined by the relative angle of the two crossed beams.

The optical components in the invention can include or be mostly replaced by a multi-zoned Holographic Optical Element ("HOE"), or a multi-zoned replicated optic. The first described embodiment includes a collimator lens, a pair of slits, a prism, and (for the return beam path) a collector lens. All four of these devices or some subset of them can be replaced by either a HOE or an all refractive multi-element array of similar format. Fabricators of such custom HOE's are able to computer-generate and E-beam etch surface relief patterns for replication, and utilize "blazing" as in diffraction gratings to increase light efficiency.

Fig. 3A shows an embodiment in which HOE 36 replaces the lenses, slits and prism of Fig. 3.

Note that a surface embossed hologram with "blaze" is really a cross-over technology device, wherein refraction and diffraction both are used to direct light paths. It combines the function of a Fresnel lens (all refractive) and non-blazed holograms which work strictly by diffraction. Embodiments including the discrete optical devices or the multi-element combinations whether refractive, diffractive, or in combination (i.e., "blazed hologram") are all within the scope of the invention.

In the specific embodiment being described, the slit spacing and lens focal length are selected to provide a 2.2° beam angle using a wavelength of 780 nm. As an example, the pitch, i.e., the spacing between the data tracks and the spacing between the servo tracks is approximately 20 microns. In this example, an interference pattern having several cycles of fringes is produced with a spacing between the fringes which is equal to the pitch of the data and servo tracks. A multiple of the relationship between fringe spacing and pitch of the tracks can be used.

Fig. 4A depicts the slits 38 and 40 in the aperture plate 31. The slits have a width w and a spacing d.

Fig. 4B depicts the relationship between the fringes of the interference pattern and the width and spacing of the aperture plate. The length $\ell$ of the interference pattern is inversely proportional to the width w of the slits and the spacing between the fringes is inversely proportional to the distance d between the slits.

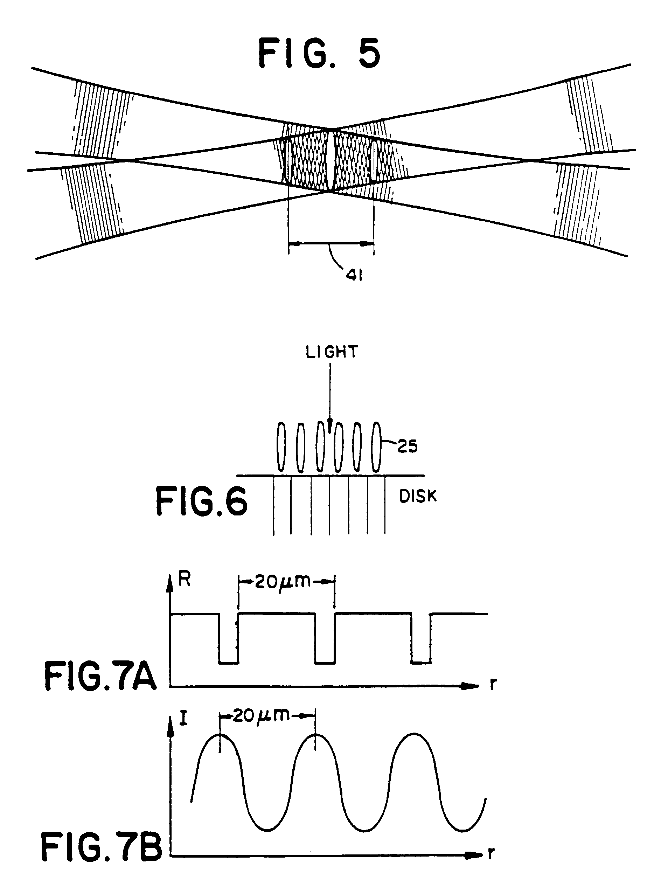

Fig. 5 shows the interference region enlarged and exaggerated to show the advantage of the present invention. An interference pattern is produced throughout the region which has been denoted 41. Because the pattern exists throughout this region, there is no need to focus the light on the disk surface. Rather, as long as the disk surface is in the region 41, the proper interference pattern is incident upon the optical tracks. This long depth of focus, which is about 1mm in the embodiment being discussed, makes the system insensitive to disk axial runout, shock, vibration, thermal expansion and other thermal changes and relaxes manufacturing tolerances. The overlap zone of the two beams is where the interference pattern exists. The three ellipses point out the extent of the overlap (and hence of the interference pattern) for 3 different focal positions.

Fig. 6 depicts the interference pattern 25 produced by the slits in relation to the pre-recorded optical pattern formed by the servo tracks.

Fig. 7A depicts the reflectivity R of the servo tracks as a function of the radius of the disk.

Fig. 7B shows the intensity I of the optical interference pattern as a function of disk radius r. When the light of the optical interference pattern is reflected from the disk surface, the reflected light is the convolution of incident light intensity and reflectivity of the servo tracks. This is specified by the well-known convolution integral:

$$\int_0^s \int_0^t I\ (s-x,t-y)\ \cdot\ R\ (x,y)\ dx\ dy$$

While the reflection of light has been shown in the specific embodiment, light could be transmitted through the disk. Similarly, the result will be the convolution of the intensity of incident light with the servo pattern. In this case, it is the transmissivity of the medium, rather than the reflectivity, which is convolved with the incident light.

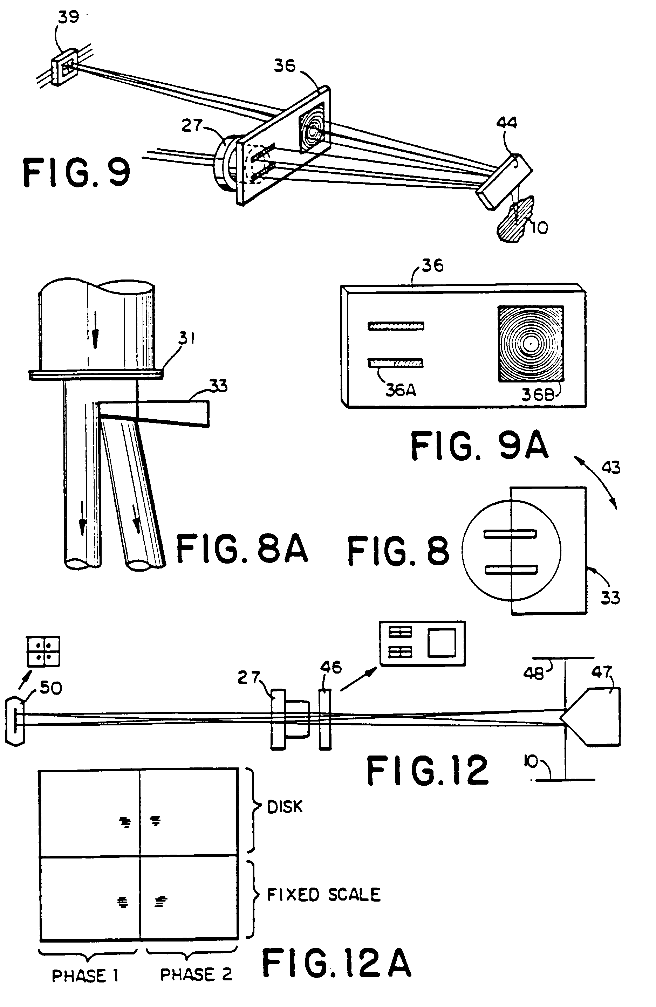

Fig. 8 shows how the prism 33 splits the interference pattern into two spots. Prism 33 covers half of the light passing through each slit. Prism 33 is rotated slightly in the direction indicated by arrow 43 to move one of the spots in the cross track, or radial, direction in order to change its phase relative to the first spot. The prism is adjusted to achieve a 90° phase shift and locked in place. In the embodiment under consideration, less than approximately one degree of rotation is required to achieve a 90° phase shift.

Fig. 8A shows the wedge cross-section of prism 33 and the beam bending action. This shows how the prism alters the location of one spot.

Figs. 9 and 9A show the holographic implementation in more detail. The HOE 36 has an area 36A which replaces lens 29, slits 31, prism 33 and lens 35. The area 36B replaces the lens 37. Fig. 9 also shows the mirror 44 directing light onto the surface of media 10 and back to detector 39.

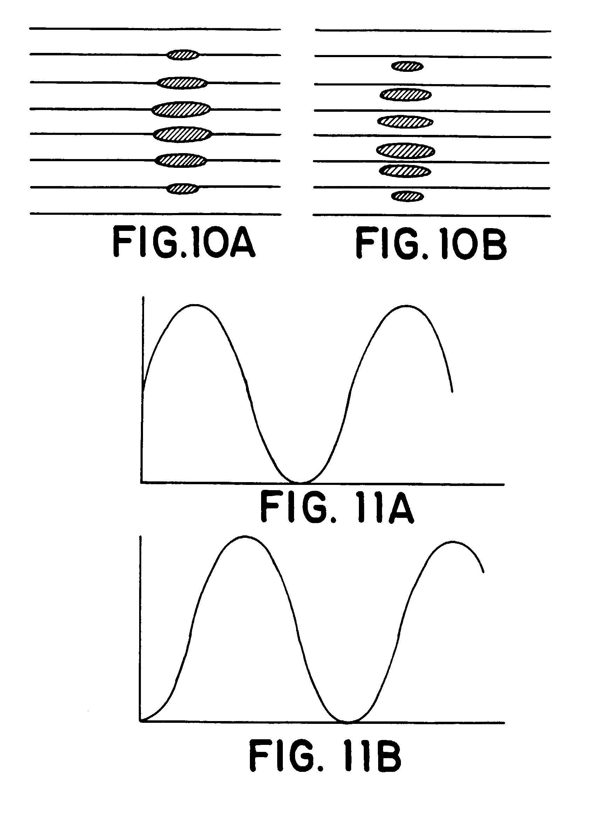

Figs. 10A and 10B depict the two interference patterns which are 90° out of phase with respect to a cycle of the servo tracks.

Fig. 11A depicts the sinusoidal signal produced by the photodetector as a function of distance in the radial direction. Fig. 11B depicts the other output of the photodetector which is a sinusoidal signal 90° out of phase with respect to the first signal. These two signals form a quadrature pair which are used in a servo system in a manner known in the art.

The optical head device of the invention can be used with a grating or ruling of the type used in linear position encoders. This is accomplished by making the optical channel "dual channel," projecting pairs of spots both onto the media disk and also onto a ruling pattern fixed inside the mechanism acting as a stationary reference scale. The same optical head collects the return light beams from both channels and produces two sets of position signals, for: a) position relative to the media disk data tracks, and b) for position relative to the drive's main framework, i.e., in terms of absolute radius from the spindle center. In this way, the same system provides both the capability of tracking the laser marked media or behaving as a conventional floppy disk drive in positioning by absolute radius from the spindle. The benefit is that with this dual channel detection system plus a dual transducer magnetic head (wide and narrow track) the drive can be made "downward compatible", that is, can be made to read and write both the new (e.g., 20 MByte) and the old (e.g., 1.4 MByte) media.

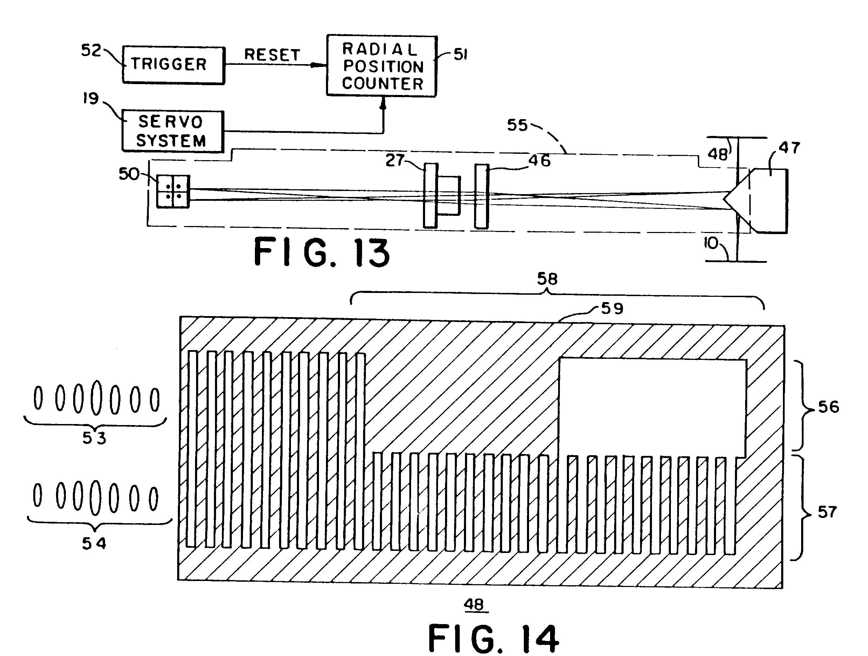

Fig. 12 shows such a two channel system. HOE 46 projects four spots which are reflected from mirror 47 onto the disk surface 10 and onto the fixed-scale surface 48 which is like a linear encoder. The reflected light, two spots from disk 10 and two spots from fixed scale surface 48, are re-imaged on the four elements of a quadrant photodetector 50, often referred to as a "quad cell photodetector."

Fig. 12A depicts the four spots incident on the quad cell photodetector 50. The top two spots are reflected from the disk with one of the spots being 90° out of phase with the other. The bottom two spots are reflected from the fixed scale surface 48 with one spot being 90° out of phase with the other.

The second set of slits to make the second set of spots for the fixed scale surface 48 is positioned at closer spacing than the first, in what was in the single channel embodiment the opaque dead zone between slits, and utilizing light which was wasted before. Note that fringe spacing is inversely proportional to the slit spacing, so the second channel spots have a larger fringe spacing. The spacing is picked to be related to the standard track pitch of the old floppy format so the second channel can be used for locating to that format. A ruled grating of pitch matching the fringe spacing is generated and mounted parallel to the media, aligned parallel to the carriage travel. The optical head directs the two pairs of beams at slightly different angles to get slight vertical separation at the surface of the turn mirror 47. The turn mirror for this version is "delta shaped", having two facets to turn one pair of beams up and the other down -- one to the disk, the other to the fixed scale.

"Differential Read" or "Common Mode Rejection" can be achieved in accordance with the invention. For each pair of spots giving quadrature signals in the embodiments described to this point, we can generate instead 4 spots, each 90° of phase apart; now the signals are paired and differenced, to give two quadrature signals with the "dc" component subtracted out. The reflectivity variations and light level variations are much less of a signal processing problem. A much simpler AGC, if any, is required.

Fig. 13 shows how the servo signal generated by the fixed scale surface 48 is used to reset the radial track counter 51. (In Fig. 13, the quadcell photodetector 50 has been shown facing the viewer, instead of the correct edgewise view of Fig. 12.) In Fig. 13, all elements in the optical head housing 55 are enclosed in a dashed line box labeled 55.

Normally, in a disk drive such as the standard 90 mm (3.5 inch) 1.44 MByte floppy, a track zero sensor is required. This device indicates precisely when the carriage is at a reference radius so a radial position counter 51 can be zeroed. This enables a drive to precisely calibrate radial position each time it powers out. Eliminating the conventional electro-mechanical track zero sensor makes a significant savings in cost and space.

In the simplest embodiment, only the encoder scale grating 48 needs to be modified. The remainder of the optical sensor remains as previously described.

Fig. 14 shows the two optical interference patterns, or spots, 53 and 54 which are incident upon the encoder fixed scale grating 48 which includes successive light and dark bars. The grating 48 includes a first portion 56 which includes a "flag area" 58 in the path of spot 53. An isolated edge identifies the reference (or zero) radius 59 of the head on the disk. The portion 57 of the encoder grating does not have the flag area. It is traversed by the spot 54.

Fig. 15A shows the servo error signal produced as the spot 53 traverses the portion 56 of the encoder grating.

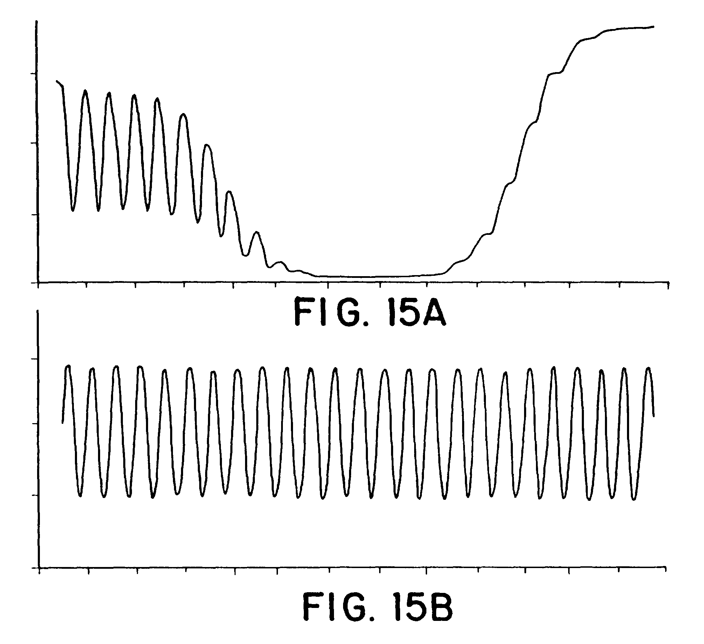

Fig. 15B shows the servo error signal produced when the spot 54 traverses the area 57 of the encoder grating 48.

The waveform of Fig. 15A is produced as the encoder spot 53 runs off the regular grating through the flag area. First an interval occurs where the sinusoidal modulation is still evident, but is dropping in amplitude to zero. Then, when the light spot 53 crosses the isolated edge in the center of the flag 58, the signal is a ramp with steps. The isolated edge is at the reference radius 59. The servo system 19 discriminates the point at which the spot 53 is crossing the reference radius. The trigger 52 resets the radial track counter 51 repeatably from this waveform. Then radial position is counted from there using only the sine wave signal (Fig. 15B) from spot 54 until the flag spot 53 acquires a normal sine wave signal when it runs off the flag. This means that a quadrature pair of signals is not available for the distance (about ten tracks worth) between the isolated flag edge 59 and the normal encoder scale area, so correct distance measurement through that interval depends on knowledge of the direction of travel, and hence is only reliable while the carriage is flying toward the inner diameter counting the cycles of the single sine wave signal it is getting.

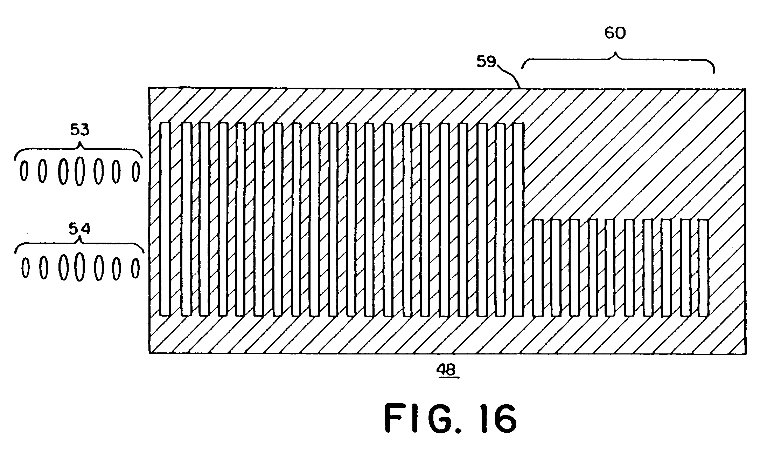

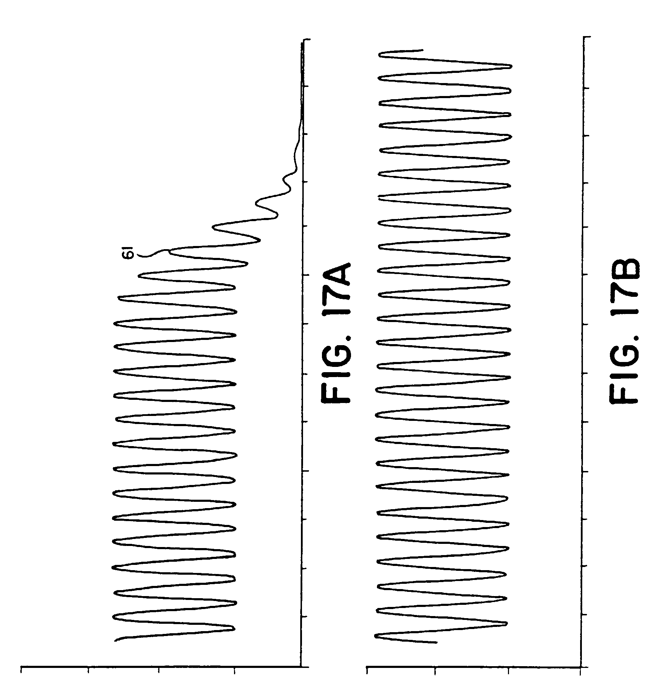

Another embodiment of the flag is shown in Fig. 16 wherein the grating 48 has a flag area 60 at the end of the encoder consisting only of a void. As in the case of Fig. 14, the flag area is approximately half the width of the encoder grating and is disposed such that only one of the spots, the flag spot 53, moves across it, and so that the edge of the flag is located essentially at the position where the light spots fall when the carriage is at the reference radius. Therefore, when the spot 53 is moving across the edge into the void, the sinusoidal servo error signal falls to about half amplitude just at the time when the carriage is at the reference radius. This is indicated at 61 in the sinusoidal servo error signal shown in Fig. 17A. Fig. 17B shows the normal undisturbed servo error signal produced by the spot 54, in quadrature with the spot 53. The servo system 19 triggers from these two waveforms, but both signals are present and usable with their quadrature relationship, so the servo system 19 has full information regardless of the disk runout or carriage direction.

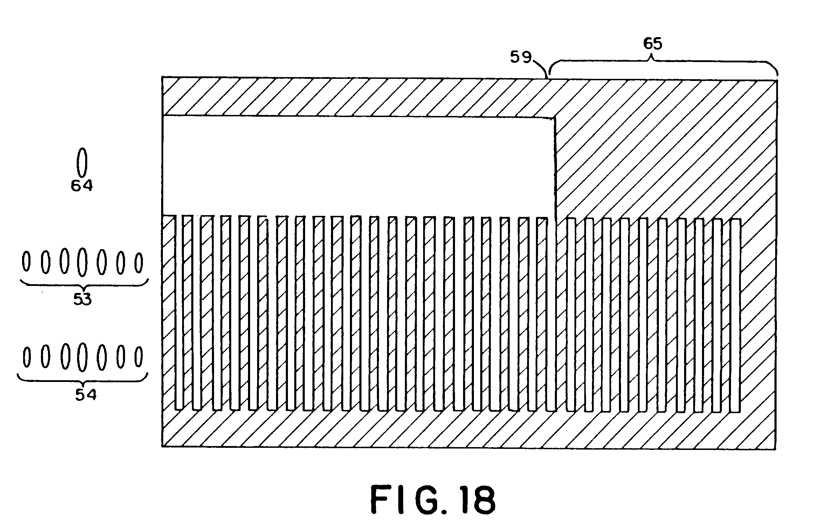

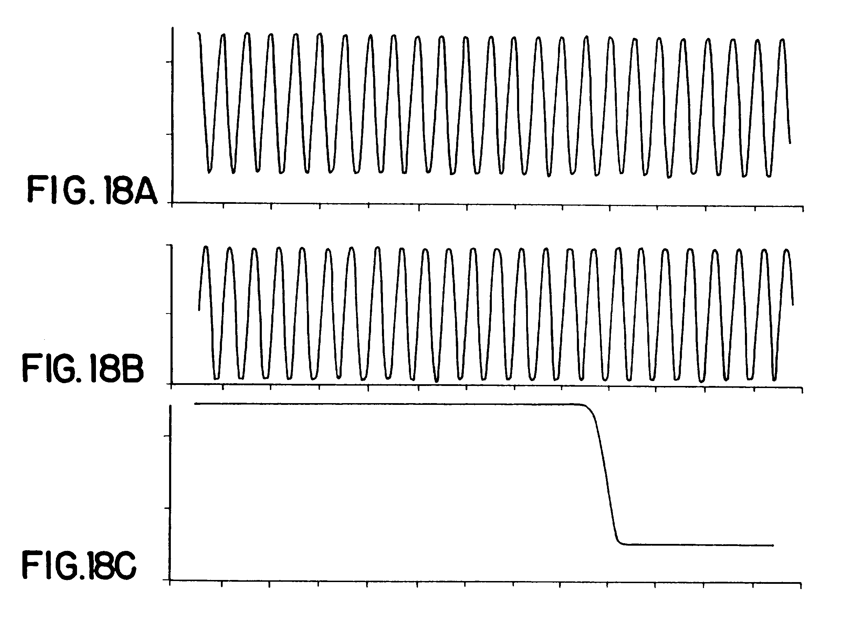

Fig. 18 shows another embodiment using a separate spot 64 which passes through a separate flag area 65 on the encoder grating. An additional photodetector is required for this embodiment. In the holographic optical element embodiment of the invention, the HOE has a zone which creates the additional spot 64 narrowly focused in the radial direction beside or between the other two encoder spots 53 and 54. The encoder has a flag 65 that intercepts only the spot 64. The flag can be the void type shown in Fig. 16, or it can be of the type shown in Fig. 14. The servo signal in this embodiment has a steep, easy to trigger edge occurring at the reference radial position 59 while the other two encoder signals are at full and unchanging amplitude in their quadrature relationship.

Fig. 18A shows the servo error signal produced as the spot 53 traverses the grating and Fig. 18B shows the servo error signal produced as the spot 54 traverses the grating. Fig. 18C shows the signal produced when the spot 64 traverses the void 65 and particularly shows the sharp edge produced as the spot passes the reference location 59.

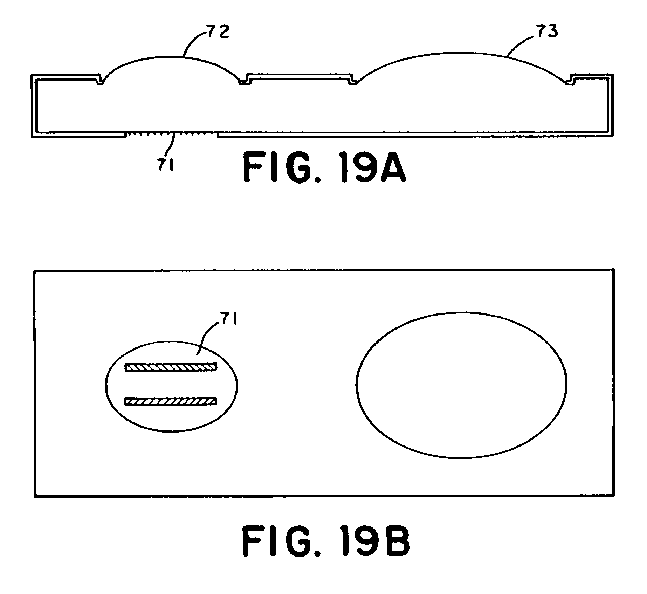

Figs. 19A and 19B show the holographic optical elements 71, the collimator lens 72 and the condenser lens 73 molded on a clear plastic blank. This embodiment of the invention provides for thermal compensation.

Laser diodes characteristically change wavelength with temperature, which gives the problem that the focal plane of a hologram shifts from the wavelength change as temperature of the laser changes. The range of temperature in which the optical tracking sensor of the invention works is several tens of degrees centigrade, enough to cause about 10 nanometers wavelength shift and enough focus shift to degrade the signal amplitude significantly. Similarly, a thermal shift problem is inherent with the embodiment using molded plastic lenses instead of a HOE. In this case, the primary contributor is the rate of change of diffractive index with temperature rather than the change of index with laser wavelength. The two phenomena have opposite sign. It is therefore possible to fashion a temperature compensated optical device analogous to the HOE which has ray bending power both in a holographic element and a molded plastic refractive element which has essentially zero focal plane shift with change of temperature of the head.

This combination device is molded into the rectangular block of transparent plastic with the HOE features 71 molded into one flat surface, but with the addition of lenslet bulges 72 and 73 molded into the opposite surface.

The temperature problem and the features of the invention that compensates for it are described below. With just a holographic element and a laser diode in an aluminum housing the contributions to the change of image focal distance with a RISE in temperature are:

1. Wavelength of laser INCREASES, decreasing focal length of hologram, making distance to image DECREASE.
2. Material between the laser and hologram expands, INCREASING distance of source from hologram, DECREASING distance to image focus.
3. Physical size of the hologram expands, INCREASING (slightly) its focal length, INCREASING distance to image focus.
4. Physical length of the housing between the hologram and the media surface, the desired image focal plane, expands (a small amount), so it is a "moving target." If the head is properly temperature compensated, the change of image location from 1 through 3 above will be an INCREASE equal to this.

The similar list for a plastic lens version of the optical head has almost the same list, except for one difference: Item 1 changes, with two parts:

a. Index of refraction of the lens DECREASES, causing the focal length of the lens to INCREASE and distance to image focus to INCREASE .
b. Index of refraction of the lens depends on wavelength slightly, such that with the INCREASE of wavelength with temperature the index DECREASES, lengthening the focal length and causing the distance to image to INCREASE.

Part 1 is dominant in the HOE case and Part la in the plastic lens case, so the defocus goes from a large decrease to a large increase.

Actual calculations for one working embodiment of the invention show that for the HOE-only system a 40 degree centigrade rise in temperature causes the image focal plane to change about -2.6 mm relative to the media plane (minus indicates decrease), an unacceptably large amount. The plastic lens version gets about +2.2 mm change, almost as large but in the opposite direction. This circumstance lends itself to the compensation method of making a combination where about half the lens power is in a plastic lens and the rest in the holographic element, prorated so their changes with temperature cancel. The following example illustrates the invention.

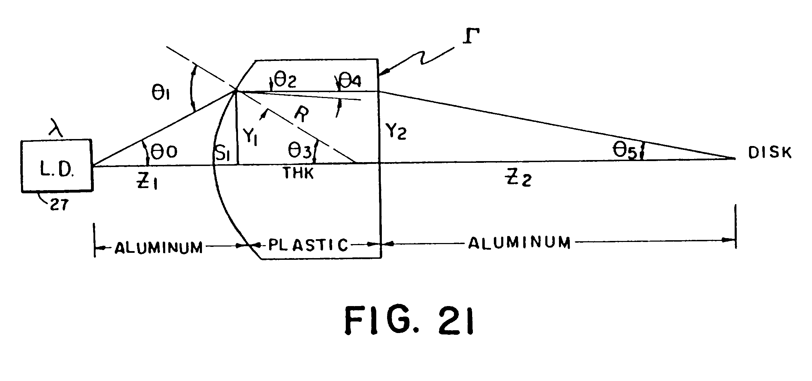

Fig. 21 shows a ray path through a curved surface, the plastic lens surface, then bending at the second flat surface at a point labeled "r". This is the bend by diffraction of the lines of the HOE, and "r" stanus for the center-to-center spacing of the lines, given in units microns, abbreviated $\mu$m.

Assume the following parameters, all at room temperatures:

$R =$          8.148 mm

$THK =$      1.500 mm

$N =$          1.572791

$\frac{dN}{dT} =$       -14 $10^5$/°C

$\alpha(\text{Plastic})=$    10 $10^{-6}$/°C

$\alpha(\text{AL.}) =$     23.4 $10^{-6}$/°C

$\frac{d\lambda}{dT}=$       .25 nm/°C

$\lambda =$         .79 $\mu$m

$\theta_5 =$        1.109°

$Z_2 =$        37.805 mm

$\theta \cdot =$ 6/253°

$\Gamma =$ 13.6 µm

The following parameters can be computed:

$Y_1$, $\Gamma$, $\theta_1$, $\theta_2$, $\theta_3$, $\theta_4$.

These parameters are computed from the eight formulas describing:

1. Input Geometry;
2. Sag of Curve;
3. Refraction;
4. Inside Geometry;
5. Thickness;
6. Diffraction;
7. Internal Angles; and
8. Output Geometry

Since R, THK, $\lambda$, N, $\theta \cdot$, $\theta_5$, and $Z_2$ were chosen, one way to solve the problem is to find $Y_1$ numerically on a computer. The resulting embodiment is:

$R =$     8.148mm
$THK =$   1.500mm
$N =$     1.572791
$\lambda =$     .79 µm
$\theta \cdot =$     6.253°
$\theta_5 =$     1.109°
$Z_2 =$     37.805mm
$(Y_2 =$     .7318mm)
$Y_1 =$     .6748mm
$\theta_2 =$     .115 radians
$\theta_3 =$     .0829 radians
$\theta_4 =$     .03874 radians
$S_1 =$     .02799 mm
$\Gamma =$     13.6018 µm
$Z_1 =$     6.1305 mm

Starting with this embodiment at room temperature, the change in focus relative to the disk can be calculated. Suppose $\Delta = +20°C$. The following occur:

- Index of refraction, N, changes (decreases).
- Radius of curvature, R, changes (increases).
- $Z_1$ expands (increases)
- THK expands (increases)
- $Y_2$ expands (increases)
- $\Gamma$ expands (increases)
- Laser wavelength increases (increases)
- $Z_2$ expands (increases)

EXPANSION OF $Z_2$ :

$$\Delta Z_2 = Z_2 \cdot \alpha_N \cdot \Delta T$$

$$= (37.805)(23.4 \cdot 10^{-6})(20°) = .018mm.$$

Let $Z_3 =$ Axial Position of Focussed Spot.

$\Delta Z_3$ can be calculated for $\Delta T = +20°C$.

Formula No. 8 now becomes:

8

$$\tan \theta_5 = \frac{Y_2}{Z_3}$$

With temperature change:

R = 8.148 increases to 8.1594
N = 1.57279 changes to 1.56999 (more correctly the change in the index of refraction should be: $\frac{dN}{dT}\Delta T + \frac{dN}{d\lambda} \cdot \frac{d\lambda}{dT}\Delta T$)
THK = 1.500 increases to 1.5021
$\lambda$ = .790 increases to .795
$Y_2$ = .7318 increases to .7329
$\Gamma$ = 13.6018 increases to 13.6208
$Z_1$ = 6.1305 increases to 6.1334

By a similar method, described above, $Y_1$, the angles, and $Z_3$ are obtained.

$Y_1$ = .67533
$\theta_5$ = 1.110°
$Z_3$ = 37.8228 mm. This is an increase of $\Delta Z_3$=+.018mm.

This is the same as for $\Delta Z_2$.

The conclusion is that $\Delta Z_3$ (the change of image focal distance) is +.018 mm, the same as $\Delta Z_2$ (the change of the physical distance between optics and media), so the head is "thermally compensated."

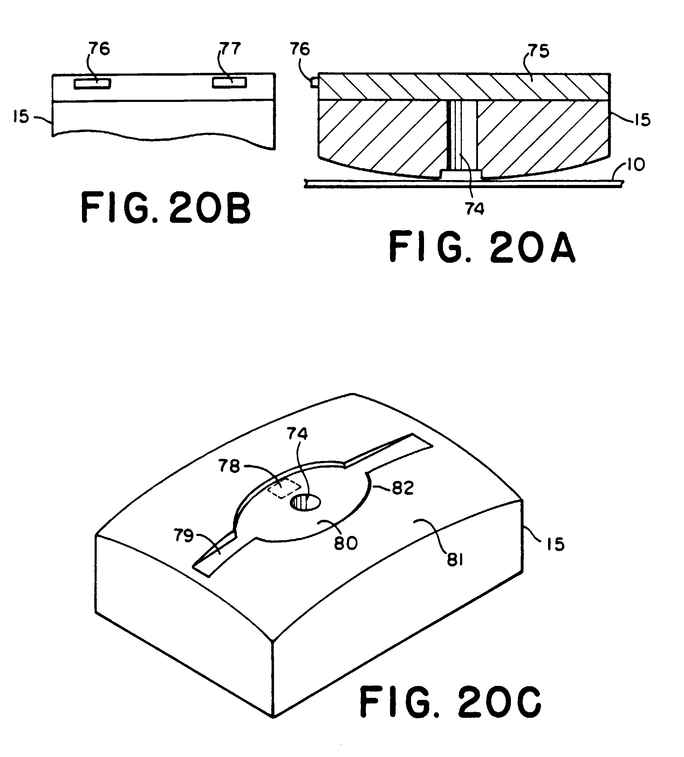

Figs. 20A and 20B show an int rated optics tracking sensor 75 attached to a magnetic read/write head 15.

A hole 74 in the magnetic head 15 allows light from the edge mounted laser 76 to be incident on the magnetic disk 10. The repeatable reflective light is incident upon the detector 77 in the integrated optics 75. Integrated optics 75 consists of optical elements and an optical path built up much as integrated circuits are, by lithographic means with parts of the optical path being essentially like optical fibers or waveguides built into the layers and patterns. Such a head has integrated HOE's, lasers, detectors and waveguides as described in: "FOCUSING GRATING COUPLER DESIGN METHOD USING HOLOGRAPHIC OPTICAL ELEMENTS", Patrick J. Cronkite and George N. Lawrence, Feb. 15, 1988, Vol. 27, No. 4; <u>APPLIED OPTICS</u>, PP. 679-683.

Magnetic head 15 has the usual magnetic pole piece 78 and groove 79. As explained more fully in the Losee, et al U.S. Patents 4,414,592 and 4,975,794, groove 79, flat area 80, and rounded area 81 provide good coupling of the head to a floppy disk. The oval outline of a very slight edge, which is very obtuse and between the flat and round zones, is denoted 82.

The materials of the substrates for the integrated optics 75 and the magnetic head 15 may be different, but the two are handled with very similar processing steps, being cut and polished to fine dimensional tolerances. The two devices can be made such that the focal distance of the optical part is precisely equal to the thickness of the magnetic head such that the two small "blocks" can be stacked with their edges referenced and cemented, and the optical spots come to be co-related in position precisely as they need to be relative to the magnetic head pole pieces.

## Claims

1. A magnetic disk storage system for reading data from or writing data to a magnetic disk surface (10) having a rotational axis (11), a plurality of data tracks, and optically detectable servo tracks (12, 13), including:

   means for rotating said disk surface about the rotational axis;
   a magnetic head (15) positioned adjacent to the disk surface for reading and/or writing data from said data tracks;
   means (17) for positioning said magnetic head with respect to said disk surface;
   an optical tracking system using said servo tracks (12, 13); and
   a servo system (19) for controlling said positioning means, said servo system being responsive to a servo error signal;

   characterised by:

   means (23) for producing an optical interference pattern (25) having a fringe spacing related to the spacing of said servo tracks, said interference pattern having a length which extends over several of said servo tracks; said interference pattern being incident upon said servo tracks; and

means for generating said servo error signal which is the convolution of said interference pattern and said servo tracks.

2. A system as claimed in claim 1, characterised in that said servo tracks (12,13) are pre-recorded concentrically with said data tracks.

3. A system as claimed in claim 1 or 2, characterised in that said fringe spacing is equal to the pitch of said servo tracks (12,13).

4. A system as claimed in claim 1, 2 or 3, characterised in that said interference pattern is reflected from said servo tracks, said system further comprising an optical detector (21;39;50), the reflected light being incident on said detector to produce said servo error signal.

5. A system as claimed in any preceding claim, further comprising means for generating two optical interference patterns, one out of phase with the other.

6. A system as claimed in claim 5, characterised by a binary cell photodetector (39), said two optical interference patterns being convolved with the servo tracks (12,13) on said disk (10), one of the convolved optical patterns being incident on one of the binary cells of said photodetector to produce said servo error signal, the other of the convolved optical patterns being incident on the other of the binary cells to produce a quadrature servo error signal.

7. A system as claimed in claim 6, characterised in that said interference pattern is divided into two independent beams with a small angular difference therebetween to create two separate interference patterns at the focal plane.

8. A system as claimed in claim 7, characterised in that said angular difference is produced by a wedge prism (33) dividing the beam in a direction nearly orthogonal to that of the optical interference, the reflected image of said two interference patterns being focused onto two cells of said detector (39) resulting in said quadrature signal.

9. A system as claimed in claim 7, characterised in that said angular difference is produced by a holographic optical element (36) dividing the beam in a direction nearly orthogonal to that of the optical interference, the reflected image of said two interference patterns being focused onto two cells of said detector (39) resulting in said quadrature signal.

10. A system as claimed in claim 4, further comprising a collecting lens (29) for focusing reflected light on said detector.

11. A system as claimed in any of claims 1 to 4, characterised in that said means for producing an interference pattern includes a coherent light source (27).

12. A system as claimed in claim 11, further characterised by an apertured plate (31) containing two slits (38,40) producing two crossed beams of coherent light.

13. A system as claimed in claim 12, and an imaging lens (37), or holographic optical element (36), wherein the spacing between said two slits (38,40) and the imaging lens focal length or holographic optical element length determines the relative angle between said two beams, the spatial frequency of said interference pattern being determined by said relative angle.

14. A system as claimed in claim 13, characterised in that said slit spacing and the focal length of said imaging lens (37) are selected to produce a beam angle of approximately 2.2° at a wavelength of about 780 nm to achieve fringe spacing of approximately 20 μm.

15. A system as claimed in any of claims 1 to 4, characterised in that said means for producing an optical interference pattern is a holographic optical element (36;46).

16. A system as claimed in claim 1, characterised in that said servo tracks (12,13) are pre-recorded on said disk, and further comprising:

a fixed grating (48);

means for generating another optical interference pattern, said other optical interference pattern being incident upon said fixed grating; and

a multiple cell detector (50) producing a signal responsive to light incident upon said servo tracks and another signal responsive to light incident upon said fixed grating.

17. A system as claimed in claim 15, further characterised by:

means for generating two further optical interference patterns, each being out of phase with the first recited two interference patterns; and

a quadrant photodetector (50) producing quadrature signals for each pair of interference patterns, said signals being differenced to provide two quadrature signals without a dc component.

18. An optical tracking servo system for a magnetic disk storage system in which information is read from or written to a plurality of data tracks about the rotational axis (11) of a magnetic disk (10) by a magnetic head (15),

wherein optical servo tracks (12,13) pre-recorded in relation to said data tracks are provided for indicating the radial position of said magnetic head (15) with respect to said magnetic disk; characterised by:

means (23) for producing an optical interference pattern having a fringe spacing related to the spacing of said servo tracks, said interference pattern having a length which extends over several of said servo tracks; said optical interference pattern being incident upon said servo tracks;

means for imaging said interference pattern on said servo tracks; and

means for generating a servo error signal which is the convolution of said interference pattern and said servo tracks.

19. A system as claimed in claim 18, further characterised by:

means for generating a second optical interference pattern, said second optical interference pattern being out of phase with the first optical interference pattern, and both of said interference patterns being imaged on said disk surface.

20. A system as claimed in claim 19, characterised by a binary cell detector (39), said first and second optical interference patterns being convolved with the servo tracks (12,13) on said disk, the convolved optical patterns being incident on the binary cells of said photodetector to produce said servo error signal and a quadrature servo error signal.

21. A system as claimed in claim 18, further characterised by means for dividing said interference pattern into two independent beams with a small angular difference therebetween to create two separate interference patterns at the focal plane.

22. A system as claimed in claim 21, characterised in that said means for dividing said interference pattern comprises a wedge prism (33) dividing the beam in a direction nearly orthogonal to that of the optical interference, the convolved image of said two interference patterns being focused onto two cells of said detector (39) resulting in said servo error signal and a quadrature servo error signal.

23. A system as claimed in claim 18, characterised in that said means for producing an interference pattern includes a coherent light source (27) and an apertured plate (31) containing two slits (38,40) producing two crossed beams of light.

24. A system as claimed in claim 23, characterised by an imaging lens (37), wherein the spacing between said two slits and the lens focal length determines the relative angle between said beams, the spatial frequency of said interference pattern being determined by said relative angle.

25. A system as claimed in claim 18, characterised in that said servo tracks are a grating (48) which is fixed with respect to said head, said interference pattern being incident upon said grating; and said means for generating a servo error signal include a detector (50) for detecting light which is the convolution of said interference pattern and said grating.

**26.** A system as claimed in claim 25, characterised in that said grating (48) has a flag area (58) different from the remainder of said grating, said flag area marking a reference position of said head with respect to said disk; and means responsive to the convolution of said interference pattern and said grating for indicating that said head is at said reference position.

**27.** A system as claimed in claim 26, further characterised by a radial position counter (51) for counting increments of radial movement of said head; said counter being reset by said means for indicating that said head is at said reference position.

**28.** A system as claimed in claim 26 or 27, characterised in that said grating (48) comprises successive light and dark bars.

**29.** A system as claimed in claim 28, characterised in that said flag area has at least one light bar and at least one dark bar having a significantly wider width than the remainder of said bars.

**30.** A system as claimed in claim 28, characterised in that said flag area (60) is a void of said successive light and dark bars.

**31.** A system as claimed in claim 30, characterised in that said void is narrower than the width of said interference pattern which is imaged on said grating.

**32.** A system as claimed in claim 25, further characterised by means for generating a second optical interference pattern, said second optical interference pattern being out of phase with the first recited optical interference pattern, and both of said interference patterns being imaged on said grating.

**33.** A system as claimed in claim 32, further characterised by:

means for generating a third optical interference pattern imaged on said grating;
said grating having a flag area marking a reference position of said head with respect to said disk;
said flag area being in the path of said third optical interference pattern.

**34.** A system as claimed in claim 18, characterised in that said means for imaging said interference pattern includes a holographic optical element (71) and a lens (72,73) moulded on a block of transparent plastics, said holographic optical element being formed on one flat surface of said block of transparent plastics and said lens being moulded on the opposite surface to provide temperature compensation of the optical elements.

**35.** A system as claimed in any of claims 18 to 34, characterised in that said head is a magnetic head for reading magnetically recorded data in said data tracks, and wherein said means for generating a servo error signal comprises an optical head responsive to the convolution of said interference pattern and said servo tracks; said magnetic head and said optical head being attached as a common structure.

**36.** A system as claimed in claim 35, characterised in that said optical head includes integrated optical elements (75) attached to said magnetic head.

**37.** A system as claimed in claim 36, characterised in that said integrated optics includes a laser diode source of light (76), holographic optical elements for producing said optical interference pattern, and a photodetector for generating said servo error signal.

**Patentansprüche**

**1.** Magnetplattenspeichersystem zum Lesen von Daten von einer magnetischen Plattenoberfläche (10) oder zum Schreiben von Daten auf eine magnetische Plattenoberfläche (10), welche eine Rotationsachse (11), mehrere Datenspuren sowie optisch erfaßbare Servospuren (12, 13) aufweist, enthaltend:

Mittel zum Drehen der Plattenoberfläche um die Rotationsachse,
einen benachbart zu der Plattenoberfläche vorgesehenen Magnetkopf (15) zum Lesen von Daten von den Datenspuren und/oder zum Schreiben von Daten auf die Datenspuren,

**EP 0 535 112 B1**

Mittel (17) zum Positionieren des Magnetkopfes gegenüber der Plattenoberfläche, ein optisches Nachführsystem, welches die Servospuren (12, 13) verwendet, und ein auf ein Servofehlersignal ansprechendes Servosystem (19) zum Steuern der Positioniermittel,

**gekennzeichnet durch**

Mittel (23) zum Erzeugen eines optischen Interferenzmusters (25), welches einen auf den Abstand der Servospuren bezogenen Streifenabstand aufweist, wobei das Interferenzmuster eine sich über mehrere Servospuren erstreckende Länge besitzt, wobei das Interferenzmuster auf die Servospuren auftrifft, und
Mittel zum Erzeugen des Servofehlersignals, welches das Faltungsintegral des Interferenzmusters und der Servospuren ist.

2. System nach Anspruch 1,
   **dadurch gekennzeichnet**, daß die Servospuren (12, 13) konzentrisch zu den Datenspuren voraufgezeichnet sind.

3. System nach Anspruch 1 oder 2,
   **dadurch gekennzeichnet**, daß der Streifenabstand gleich der Teilung der Servospuren (12, 13) ist.

4. System nach Anspruch 1, 2 oder 3,
   **dadurch gekennzeichnet**, daß das Interferenzmuster von den Servospuren reflektiert wird, wobei das System weiterhin einen optischen Detektor (21; 39; 50) aufweist, auf den das reflektierte Licht auftrifft, um das Servofehlersignal zu erzeugen.

5. System nach einem der vorstehenden Ansprüche,
   weiterhin enthaltend Mittel zum Erzeugen zweier optischer Interferenzmuster, die gegeneinander phasenverschoben sind.

6. System nach Anspruch 5,
   **gekennzeichnet durch** einen Binärzellen-Photodetektor (39), wobei die beiden optischen Interferenzmuster mit den Servospuren (12, 13) auf der Platte (10) mit dem Faltungsintegral integriert sind, wobei eines der so integrierten optischen Muster auf eine der Binärzellen des Photodetektors auftrifft, um das Servofehlersignal zu erzeugen, und wobei das andere der so integrierten optischen Muster auf die andere Binärzelle auftrifft, um ein um 90° phasenverschobenes Servofehlersignal zu erzeugen.

7. System nach Anspruch 6,
   **dadurch gekennzeichnet**, daß das Interferenzmuster in zwei unabhängige Strahlen mit einer kleinen Winkeldifferenz zwischen ihnen aufgeteilt wird, um zwei separate Interferenzmuster in der Fokalebene zu erzeugen.

8. System nach Anspruch 7,
   **dadurch gekennzeichnet**, daß die Winkeldifferenz durch ein Keilprisma (33) erzeugt wird, welches den Strahl in eine Richtung annähernd orthogonal zu der Richtung der optischen Interferenz aufteilt, wobei das reflektierte Bild der beiden Interferenzmuster auf die beiden Zellen des Detektors (39) fokussiert wird, wodurch das um 90° phasenverschobene Signal hervorgerufen wird.

9. System nach Anspruch 7,
   **dadurch gekennzeichnet**, daß die Winkeldifferenz durch ein holographisches, optisches Element (36) erzeugt wird, welches den Strahl in eine Richtung annähernd orthogonal zu der Richtung der optischen Interferenz aufteilt, wobei das reflektierte Bild der beiden Interferenzmuster auf die beiden Zellen des Detektors (39) fokussiert wird, wodurch das um 90° phasenverschobene Signal hervorgerufen wird.

10. System nach Anspruch 4,
    weiterhin enthaltend eine Sammellinse (29) zum Fokussieren des reflektierten Lichts auf den Detektor.

11. System nach einem der Ansprüche 1 bis 4,
    **dadurch gekennzeichnet**, daß das Mittel zum Erzeugen eines Interferenzmusters eine kohärente Lichtquelle (27) enthält.

12. System nach Anspruch 11,

weiterhin **gekennzeichnet durch** eine Lochplatte (31), welche zwei Schlitze (38, 40) aufweist, die zwei sich kreuzende Strahlen kohärenten Lichts erzeugen.

13. System nach Anspruch 12 und eine Bildlinse (37) oder ein holographisches optisches Element (36), wobei der Abstand zwischen den beiden Schlitzen (38, 40) und die Bildlinsenbrennweite oder die Länge des holographischen optischen Elements den Relativwinkel zwischen den beiden Strahlen bestimmen, wobei die Raumfrequenz des Interferenzmusters durch den Relativwinkel bestimmt ist.

14. System nach Anspruch 13,
**dadurch gekennzeichnet**, daß der Schlitzabstand und die Brennweite der Bildlinse (37) so gewählt sind, daß ein Strahlwinkel von annähernd 2,2° bei einer Wellenlänge von ca. 780 nm erzeugt wird, um einen Streifenabstand von annähernd 20 μm zu erhalten.

15. System nach einem der Ansprüche 1 bis 4,
**dadurch gekennzeichnet**, daß das Mittel zum Erzeugen eines optischen Interferenzmusters ein holographisches optisches Element (36; 46) ist.

16. System nach Anspruch 1,
**dadurch gekennzeichnet**, daß die Servospuren (12, 13) auf der Platte voraufgezeichnet sind, und daß das System weiter enthält:

   ein ortsfestes Gitter (48),
   Mittel zum Erzeugen eines anderen optischen Interferenzmusters, wobei das andere optische Interferenzmuster auf das ortsfeste Gitter auftrifft, und einen Mehrzellendetektor (50), welcher ein Signal in Reaktion auf das auf die Servospuren einfallende Licht und ein weiteres Signal in Reaktion auf das auf das ortsfeste Gitter einfallende Licht erzeugt.

17. System nach Anspruch 15,
weiterhin **gekennzeichnet durch**:

   Mittel zum Erzeugen zweier weiterer optischer Interferenzmuster, die jeweils gegenüber den beiden erstgenannten Interferenzmustern phasenverschoben sind, und
   einen Quadrantphotodetektor (50), welcher um 90° phasenverschobene Signale für jedes Paar Interferenzmuster erzeugt, wobei die Signale differenziert werden, um zwei um 90° phasenverschobene Signale ohne Gleichstromkomponente zu erhalten.

18. Optisches Nachführ-Servosystem für ein Magnetplattenspeichersystem, bei dem Informationen durch einen Magnetkopf (15) von mehreren um eine Drehachse (11) einer Magnetplatte (10) verlaufenden Datenspuren gelesen oder auf diese geschrieben werden,
bei dem optische, gegenüber den Datenspuren voraufgezeichnete Servospuren (12, 13) zum Anzeigen der radialen Position des Magnetkopfes (15) gegenüber der Magnetplatte verwendet werden,
**gekennzeichnet durch**:

   Mittel (23) zum Erzeugen eines optischen Interferenzmusters, das einen auf den Abstand der Servospuren bezogenen Streifenabstand aufweist, wobei das Interferenzmuster eine Länge besitzt, die sich über mehrere Servospuren erstreckt, und
   wobei das optische Interferenzmuster auf die Servospuren auftrifft,
   Mittel zum Darstellen dieses Interferenzmusters auf den Servospuren, sowie Mittel zum Erzeugen eines Servofehlersignals, welches das Faltungsintegral des Interferenzmusters und der Servospuren ist.

19. System nach Anspruch 18,
weiterhin **gekennzeichnet durch**:
Mittel zum Erzeugen eines zweiten optischen Interferenzmusters, wobei das zweite optische Interferenzmuster phasenverschoben zu dem ersten optischen Interferenzmuster ist und beide Interferenzmuster auf der Plattenoberfläche abgebildet sind.

20. System nach Anspruch 19,
**gekennzeichnet durch** einen Binärzellen-Detektor (39), wobei das erste und das zweite optische Interferenzmuster mit den Servospuren (12, 13) auf der Platte mit dem Faltungsintegral integriert sind und wobei die so integrierten optischen Muster auf die Binärzellen des Photodetektors auftreffen, um das Servofehlersignal und ein um 90° phasenverschobenes Servofehlersignal zu erzeugen.

21. System nach Anspruch 18,
weiterhin **gekennzeichnet durch** Mittel zum Aufteilen der Interferenzmuster in zwei unabhängige Strahlen mit einer kleinen Winkeldifferenz zwischen diesen, um zwei separate Interferenzmuster in der Fokalebene zu erzeugen.

22. System nach Anspruch 21,
**dadurch gekennzeichnet**, daß das Mittel zum Aufteilen der Interferenzmuster ein Keilprisma (33) aufweist, das den Strahl in eine Richtung annähernd orthogonal zu der Richtung der optischen Interferenz aufteilt, wobei das mit dem Faltungsintegral integrierte Bild der beiden Interferenzmuster auf die beiden Zellen des Photodetektors (39) fokussiert wird, wodurch das Servofehlersignal und ein um 90° phasenverschobenes Servofeh-lersignal hervorgerufen wird.

23. System nach Anspruch 18,
**dadurch gekennzeichnet**, daß das Mittel zum Erzeugen eines Interferenzmusters eine kohärente Lichtquelle (27) und eine Lochplatte (31) aufweist, die zwei Schlitze (38, 40) besitzt, welche zwei sich kreuzende Lichtstrahlen erzeugen.

24. System nach Anspruch 23,
**gekennzeichnet durch** eine Bildlinse (37), wobei der Abstand zwischen den beiden Schlitzen und die Linsenbrennweite den Relativwinkel zwischen den Strahlen bestimmen und wobei die Raumfrequenz des Interferenzmusters durch den Relativwinkel bestimmt wird.

25. System nach Anspruch 18,
**dadurch gekennzeichnet**, daß die Servospuren ein Gitter (48) sind, welches ortsfest gegenüber dem Kopf ist, wobei das Interferenzmuster auf das Gitter auftrifft und wobei die Mittel zum Erzeugen eines Servofehlersignals einen Detektor (50) zum Erfassen von Licht aufweisen, welches das Faltungsintegral des Interferenzmusters und des Gitters ist.

26. System nach Anspruch 25,
**dadurch gekennzeichnet**, daß das Gitter (48) einen Markierungsbereich (58) aufweist, der von dem übrigen Gitter verschieden ist, wobei der Markierungsbereich eine Referenzposition des Kopfes gegenüber der Platte kennzeichnet, und daß Mittel vorgesehen sind, die auf das Faltungsintegral des Interferenzmusters und des Gitters ansprechen, um anzuzeigen, daß sich der Kopf in der Referenzposition befindet.

27. System nach Anspruch 26,
weiterhin **gekennzeichnet durch** einen Radialpositionszähler (51) zum Zählen von Inkrementen der radialen Bewegung des Kopfes, wobei der Zähler durch Mittel zum Anzeigen, daß der Kopf sich in der Referenzposition befindet, zurückgesetzt wird.

28. System nach Anspruch 26 oder 27,
**dadurch gekennzeichnet**, daß das Gitter (48) aufeinanderfolgende helle und dunkle Balken aufweist.

29. System nach Anspruch 28,
**dadurch gekennzeichnet**, daß der Markierungsbereich zumindest einen hellen Balken und zumindest einen dunklen Balken aufweist, die eine signifikant breitere Breite als die verbleibenden Balken besitzen.

30. System nach Anspruch 28,
**dadurch gekennzeichnet**, daß der Markierungsbereich (60) ein Leerraum hinsichtlich der aufeinanderfolgenden hellen und dunklen Balken ist.

31. System nach Anspruch 30,
**dadurch gekennzeichnet**, daß der Leerraum schmaler als die Breite des Interferenzmusters ist, welches auf dem Gitter abgebildet wird.

**EP 0 535 112 B1**

**32.** System nach Anspruch 25,
weiterhin **gekennzeichnet durch** Mittel zum Erzeugen eines zweiten optischen Interferenzmusters, wobei sich das zweite optische Interferenzmuster außer Phase mit dem erstgenannten optischen Interferenzmuster befindet und wobei beide Interferenzmuster auf dem Gitter abgebildet werden.

**33.** System nach Anspruch 32,
weiterhin **gekennzeichnet durch**:

Mittel zum Erzeugen eines dritten optischen Interferenzmusters, welches auf dem Gitter abgebildet wird,
wobei das Gitter einen Markierungsbereich aufweist, der eine Referenzposition des Kopfes gegenüber der Platte markiert, und
wobei der Markierungsbereich sich in dem Pfad des dritten optischen Interferenzmusters befindet.

**34.** System nach Anspruch 18,
**dadurch gekennzeichnet**, daß das Mittel zum Abbilden des Interferenzmusters ein holographisches optisches Element (71) und eine Linse (72, 73) enthält, welche auf einem Block aus transparentem Kunststoff geformt sind, wobei das holographische optische Element an einer flachen Oberfläche des Blocks aus durchsichtigem Kunststoff gebildet ist und wobei die Linse an der gegenüberliegenden Oberfläche geformt ist, um eine Temperaturkompensation des optischen Elements zu schaffen.

**35.** System nach einem der Ansprüche 18 bis 34,
**dadurch gekennzeichnet**, daß der Kopf ein Magnetkopf zum Lesen magnetisch aufgezeichneter Daten in den Datenspuren ist, wobei die Mittel zum Erzeugen eines Servofehlersignals einen optischen Kopf aufweisen, der auf das Faltungsintegral des Interferenzmusters und der Servospuren anspricht, und wobei der Magnetkopf und der optische Kopf in einer gemeinsamen Struktur angeordnet sind.

**36.** System nach Anspruch 35,
**dadurch gekennzeichnet**, daß der optische Kopf integrierte optische Elemente (75) aufweist, die an dem Magnetkopf angebracht sind.

**37.** System nach Anspruch 36,
**dadurch gekennzeichnet**, daß die integrierte Optik eine Laserdiodenlichtquelle (76), holographische optische Elemente zum Erzeugen des optischen Interferenzmusters und einen Photodetektor zum Erzeugen des Servofehlersignals enthält.

**Revendications**

**1.** Système de stockage sur disque magnétique pour lire ou écrire des données sur la surface (10) d'un disque magnétique ayant un axe de rotation (11), une multitude de pistes de données, et des pistes de servo optiquement détectables (12, 13), comprenant :

- un moyen pour faire tourner ladite surface du disque autour de l'axe rotationnel;
- une tête magnétique (15) placé dans le voisinage de la surface du disque pour lire et/ou écrire des données sur lesdites pistes de données;
- un moyen (17) pour positionner ladite tête magnétique par rapport à ladite surface du disque;
- un système de poursuite optique utilisant lesdites pistes de servo (12, 13), et
- un servosystème (19) pour commander ledit moyen de positionnement, ledit servosystème répondant à un signal d'erreur du servo;

caractérisé par :

- un moyen (23) pour fournir une figure d'interférence optique (25) ayant un espacement des franges ayant rapport à l'espacement desdites pistes asservies, ladite figure d'interférence ayant une longueur qui s'étend sur plusieurs desdites pistes de servo;
- ladite figure d'interférence tombant sur lesdites pistes de servo; et
- un moyen pour produire ledit signal d'erreur de servo qui est la convolution de ladite figure d'interférence et desdites pistes de servo.

16

**2.** Système selon la revendication 1, caractérisé en ce que les pistes de servo (12, 13) sont pré-enregistrées concentriquement auxdites pistes de données.

**3.** Système selon la revendication 1 ou 2, caractérisé en ce que ledit espacement des franges est égal au pas desdites pistes de servo (12, 13).

**4.** Système selon les revendications 1, 2 ou 3, caractérisé en ce que ladite figure d'interférence est réfléchie par lesdites pistes de servo, ledit système comportant en outre un détecteur optique (21; 39; 50), la lumière réfléchie tombant sur ledit détecteur pour produire ledit signal d'erreur de servo.

**5.** Système selon l'une quelconque des revendications précédentes, comportant en outre un moyen pour produire deux figures d'interférence optique, l'une déphasée par rapport à l'autre.

**6.** Système selon la revendication 5, caractérisé par un photodétecteur (39) à cellules binaires, lesdites deux figures d'interférence optique étant enroulées avec les pistes de servo (12, 13) sur ledit disque (10), l'une des figures optiques enroulées tombant sur l'une des cellules binaires dudit photodétecteur pour produire ledit signal d'erreur de servo, l'autre des figures optiques enroulées tombant sur l'autre des cellules binaires pour produire un signal d'erreur de servo en quadrature.

**7.** Système selon la revendication 6, caractérisé en ce que ladite figure d'interférence est divisée en deux faisceaux indépendants avec une petite différence angulaire entre eux afin de créer au plan focal deux figures d'interférence séparées.

**8.** Système selon la revendication 7, caractérisé en ce que ladite différence angulaire est produite par un prisme à coin (33) divisant le faisceau dans une direction presque orthogonale à celle de l'interférence optique, l'image réfléchie desdites deux figures d'interférence étant focalisée sur les deux cellules dudit détecteur (39), se traduisant par ledit signal en quadrature.

**9.** Système selon la revendication 7, caractérisé en ce que ladite différence angulaire est produite par un élément optique holographique (36) divisant le faisceau dans une direction presque orthogonale à celle de l'interférence optique, l'image réfléchie desdites deux figures d'interférence étant focalisée sur les deux cellules dudit détecteur (39), se traduisant par ledit signal en quadrature.

**10.** Système selon la revendication 4, comprenant en outre une lentille convergente (29) pour focaliser la lumière réfléchie sur ledit détecteur.

**11.** Système selon l'une quelconque des revendications 1 à 4, caractérisé en ce que ledit moyen pour produire une figure d'interférence comprend une source de lumière cohérente (27).

**12.** Système selon la revendication 11, caractérisé en outre par une plaque à ouverture (31) contenant deux fentes (38, 40) produisant deux faisceaux croisés de lumière cohérente.

**13.** Système selon la revendication 12, et une lentille d'imagerie (37) ou un élément optique holographique (36), où l'espacement entre lesdites deux fentes (38, 40) et la distance focale de la lentille d'imagerie ou la longueur de l'élément optique holographique déterminent l'angle relatif entre lesdits deux faisceaux, la fréquence spatiale de ladite figure d'interférence étant déterminée par ledit angle relatif.

**14.** Système selon la revendication 13, caractérisé en ce que ledit espacement des fentes et la distance focale de ladite lentille d'imagerie (37) sont choisis pour produire un angle des faisceaux d'environ 2,2° à une longueur d'onde d'environ 780 nm pour obtenir un espacement des franges d'environ 20 µm.

**15.** Système selon l'une quelconque des revendications 1 à 4, caractérisé en ce que ledit moyen pour produire une figure d'interférence optique est un élément optique holographique (36; 46).

**16.** Système selon la revendication 1, caractérisé en ce que lesdites pistes de servo (12, 13) sont pré-enregistrées sur ledit disque, et comportant en outre :

- un réseau de diffraction fixe (48);

- un moyen pour produire une autre figure d'interférence optique, ladite autre figure d'interférence optique tombant sur ledit réseau de diffraction fixe; et
- un détecteur à cellules multiples (50) produisant un signal répondant à la lumière tombant sur lesdites pistes de servo et un autre signal répondant à la lumière tombant sur ledit réseau de diffraction fixe.

**17.** Système selon la revendication 15, caractérisé en outre par :

- un moyen pour produire deux autres figures d'interférence optique, chacune étant déphasée par rapport à la première citée des deux figures d'interférence; et
- un photodétecteur à quadrant (50) produisant des signaux en quadrature pour chaque paire de figures d'interférence, lesdits signaux étant différenciés afin de fournir deux signaux en quadrature sans composante à courant continu.

**18.** Servosystème de poursuite optique pour un système de stockage sur disque magnétique dans lequel l'information est lue ou écrite sur une multitude de pistes de données autour de l'axe de rotation (11) d'un disque magnétique (10) par une tête magnétique (15),
dans lequel des pistes de servo optiques (12, 13) pré-enregistrées en relation avec lesdites pistes de données sont fournies pour indiquer la position radiale de ladite tête magnétique (15) par rapport audit disque magnétique; caractérisé par :

- un moyen (23) pour produire une figure d'interférence optique ayant un espacement des franges lié à l'espacement desdites pistes de servo, ladite figure d'interférence ayant une longueur qui s'étend sur plusieurs desdites pistes de servo;
- ladite figure d'interférence optique tombant sur lesdites pistes de servo;
- un moyen pour procéder à l'imagerie de ladite figure d'interférence sur lesdites pistes de servo; et
- un moyen pour produire un signal d'erreur de servo qui est la convolution de ladite figure d'interférence et desdites pistes de servo.

**19.** Système selon la revendication 18, caractérisé en outre par :

- un moyen pour produire une seconde figure d'interférence optique, ladite seconde figure d'interférence optique étant déphasée par rapport à la première figure d'interférence optique, et lesdites deux figures d'interférence étant imagées sur ladite surface du disque.

**20.** Système selon la revendication 19, caractérisé par un détecteur à cellules binaires (39), lesdites première et seconde figures d'interférence optique étant enroulées avec les pistes de servo (12, 13) sur ledit disque, les figures optiques enroulées tombant sur les cellules binaires dudit photodétecteur pour produire ledit signal d'erreur de servo et un signal d'erreur de servo en quadrature.

**21.** Système selon la revendication 18, caractérisé en ce que outre par un moyen pour diviser ladite figure d'interférence en deux faisceaux indépendants avec une petite différence angulaire entre eux afin de créer au plan focal deux figures d'interférence séparées.

**22.** Système selon la revendication 21, caractérisé en ce que ledit moyen pour diviser ladite figure d'interférence comprend un prisme à coin (33) divisant le faisceau dans une direction presque orthogonale à celle de l'interférence optique, l'image enroulée desdites deux figures d'interférence étant focalisée sur les deux cellules dudit détecteur (39), se traduisant par ledit signal d'erreur de servo et un signal d'erreur de servo en quadrature.

**23.** Système selon la revendication 18, caractérisé en ce que ledit moyen pour produire une figure d'interférence comprend une source de lumière cohérente (27) et une plaque à ouverture (31) contenant deux fentes (38, 40) produisant deux faisceaux croisés de lumière.

**24.** Système selon la revendication 23, caractérisé par une lentille d'imagerie (37), dans lequel l'espacement entre lesdites deux fentes et la distance focale de la lentille déterminent l'angle relatif entre lesdits faisceaux, la fréquence spatiale de ladite figure d'interférence étant déterminée par ledit angle relatif.

**25.** Système selon la revendication 18, caractérisé en ce que les pistes de servo sont un réseau de diffraction (48) qui est fixe par rapport à ladite tête, ladite figure d'interférences tombant sur ledit réseau de diffraction; et ledit moyen pour produire un signal d'erreur de servo comporte un détecteur (50) pour détecter la lumière qui est la convolution de ladite figure d'interférence et dudit réseau de diffraction.

26. Système selon la revendication 25, caractérisé en ce que ledit réseau de diffraction (48) a une zone indicatrice (58) différente du reste dudit réseau de diffraction, ladite zone indicatrice marquant une position de référence de ladite tête par rapport audit disque; et un moyen répondant à la convolution de ladite figure d'interférence et dudit réseau de diffraction pour indiquer que ladite tête se trouve à ladite position de référence.

27. Système selon la revendication 26, caractérisé en outre par un compteur de position radiale (51) pour compter les incréments du déplacement radial de ladite tête; ledit compteur étant remis à zéro par ledit moyen pour indiquer que ladite tête se trouve à ladite position de référence.

28. Système selon la revendication 26 ou 27, caractérisé en ce que ledit réseau de diffraction (48) comprend des barres claires et sombres successives.

29. Système selon la revendication 28, caractérisé en ce que ladite zone indicatrice a au moins une barre claire et au moins une barre sombre ayant une largeur sensiblement plus grande que le reste desdites barres.

30. Système selon la revendication 28, caractérisé en ce que ladite zone indicatrice (60) est un vide desdites barres claires et sombres successives.

31. Système selon la revendication 30, caractérisé en ce que ledit vide est plus étroit que la largeur de ladite figure d'interférence qui est imagée sur ledit réseau de diffraction.

32. Système selon la revendication 25, caractérisé en outre par un moyen pour produire une seconde figure d'interférence optique, ladite seconde figure d'interférence optique étant déphasée par rapport à la figure d'interférence optique citée en premier, et lesdites deux figures d'interférence étant imagées sur ledit réseau de diffraction.

33. Système selon la revendication 32, caractérisé en outre par :

   - un moyen pour produire une troisième figure d'interférence optique imagée sur ledit réseau de diffraction;
   - ledit réseau de diffraction ayant une zone indicatrice marquant une position de référence de ladite tête par rapport audit disque;
   - ladite zone indicatrice se trouvant dans le trajet de ladite troisième figure d'interférence optique.

34. Système selon la revendication 18, caractérisé en ce que ledit moyen pour imager ladite figure d'interférence comprend un élément optique holographique (71) et une lentille (72, 73) moulés sur un bloc de plastique transparent, ledit élément optique holographique étant formé sur une surface plate dudit bloc de plastique transparent et ladite lentille étant moulée sur la surface opposée afin de fournir une compensation de température des éléments optiques.

35. Système selon l'une quelconque des revendications 18 à 34, caractérisé en ce que ladite tête est une tête magnétique pour lire les données enregistrées magnétiquement dans lesdites pistes de données, et dans lequel ledit moyen pour produire un signal d'erreur de servo comprend une tête optique répondant à la convolution de ladite figure d'interférence et desdites pistes de servo;

   - ladite tête magnétique et ladite tête optique étant fixées comme une structure commune.

36. Système selon la revendication 35, caractérisé en ce que ladite tête optique comprend des éléments optiques intégrés (75) fixés à ladite tête magnétique.

37. Système selon la revendication 36, caractérisé en ce que ledit système optique intégré comprend une source lumineuse (76), à diode laser, des éléments optiques holographiques pour produire ladite figure d'interférence optique, et un photodétecteur pour produire ledit signal d'erreur de servo.

FIG. 1

FIG. 2

EP 0 535 112 B1

FIG.3

FIG.4

INTERFERENCE
REGION

FIG.3A

FIG.4A

FIG.4B

# FIG. 5

41

LIGHT

## FIG.6

25

DISK

## FIG.7A

R

$20\mu m$

r

## FIG.7B

I

$20\mu m$

r

EP 0 535 112 B1

FIG. 9

FIG. 8A

FIG. 9A

FIG. 8

FIG.12

FIG.12 A

23

FIG.IOA

FIG.IOB

FIG. 11A

FIG. 11B

EP 0 535 112 B1

52 ─ TRIGGER ── RESET ── RADIAL POSITION COUNTER ─ 51

19 ─ SERVO SYSTEM

55

50

27    46    48    47

**FIG. 13**

10

58

59

0 0 0 0 0 0 0
53

0 0 0 0 0 0 0
54

56

57

48

**FIG. 14**

EP 0 535 112 B1

FIG. 15A

FIG. 15B

FIG. 16

EP 0 535 112 B1

EP 0 535 112 B1

**FIG. 17A**

**FIG. 17B**

FIG.18

FIG. 18A

FIG. 18B

FIG. 18C

EP 0 535 112 B1

FIG. 19A

FIG. 19B

31

FIG. 20B

FIG. 20A

FIG. 20C

FIG. 21

EP 0 535 112 B1